(19) Europäisches Patentamt | European Patent Office | Office européen des brevets

(11) **EP 2 787 629 B1**

(12) **EUROPEAN PATENT SPECIFICATION**

(45) Date of publication and mention
of the grant of the patent:
**16.10.2019 Bulletin 2019/42**

(51) Int Cl.:
***H02M 7/75*** *(2006.01)*     ***B60L 15/00*** *(2006.01)*
***H02P 27/08*** *(2006.01)*

(21) Application number: **14160732.5**

(22) Date of filing: **19.03.2014**

(54) **Inverter device and inverter control device for controlling the same**

Umrichtervorrichtung und Umrichtersteuervorrichtung zu seiner Steuerung

Dispositif onduleur et dispositif de commande d'onduleur pour le commander

(84) Designated Contracting States:
**AL AT BE BG CH CY CZ DK EE ES FI FR GR HR
HU IE IS IT LI LT LU LV MC MK MT NL NO PL PT
RO RS SE SI SK SM TR**

(30) Priority: **05.04.2013 JP 2013079096**

(43) Date of publication of application:
**08.10.2014 Bulletin 2014/41**

(73) Proprietor: **Hitachi, Ltd.
Tokyo 100-8280 (JP)**

(72) Inventors:
• **Tachihara, Shuichi
Chiyoda-ku, Tokyo 100-8280 (JP)**

• **Suzuki, Masato
Chiyoda-ku, Tokyo 100-8280 (JP)**
• **Mori, Yuki
Chiyoda-ku, Tokyo 100-8280 (JP)**

(74) Representative: **Mewburn Ellis LLP
City Tower
40 Basinghall Street
London EC2V 5DE (GB)**

(56) References cited:
**JP-A- H09 247 953**     **JP-A- 2005 137 197**
**JP-A- 2012 065 481**     **US-A1- 2002 008 489**
**US-A1- 2008 112 695**

## EP 2 787 629 B1

**Description**

BACKGROUND OF THE INVENTION

Field of the Invention

The present invention relates to an inverter device to convert a direct-current voltage into a three-phase alternating-current voltage.

Description of the Related Art

In the field of railway vehicles, there is widely used a method in which one inverter device operates one to four three-phase alternating-current electric motors at variable speed, and thereby accelerates or decelerates a vehicle. The inverter device performs ON-OFF controls of multiple switching elements based on pulse width modulation (PWM), and thereby converts a direct-current voltage into an alternating-current voltage with an intended amplitude and frequency to apply it to the alternating-current electric motors.

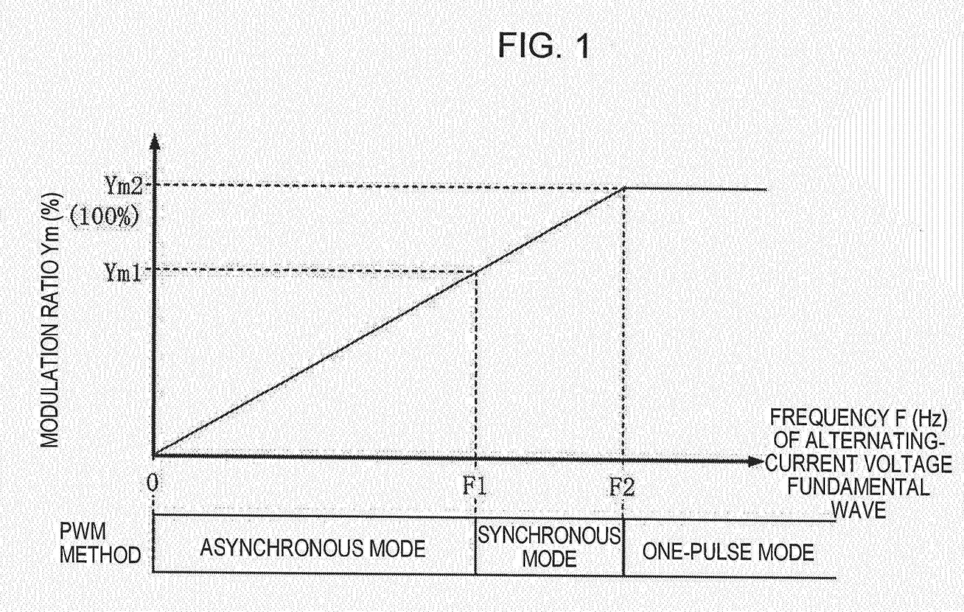

FIG. 1 shows a relation of the amplitude and the frequency of an alternating-current voltage fundamental wave that is generally used in an inverter device for railway vehicles. The horizontal axis indicates the frequency of the alternating-current voltage fundamental wave, and the vertical axis indicates the amplitude of the alternating-current voltage fundamental wave normalized by the maximum amplitude of the alternating-current voltage fundamental wave that the inverter device can output (hereinafter, referred to as the modulation ratio).

In a region in which the frequency of the alternating-current voltage fundamental wave is low (the region of F2 or less in the figure), the modulation ratio is increased in proportion to the frequency. That is, in FIG. 1, (F1, Ym1) and (F2, Ym2) are present in the same straight line. Then, after the amplitude of the alternating-current voltage becomes the maximum, only the frequency of the alternating-current voltage is increased.

Thus, the inverter device for railway vehicles generally performs a variable voltage variable frequency control in the region in which the frequency is F2 or less, and performs a constant voltage variable frequency control in the region in which the frequency is F2 or more.

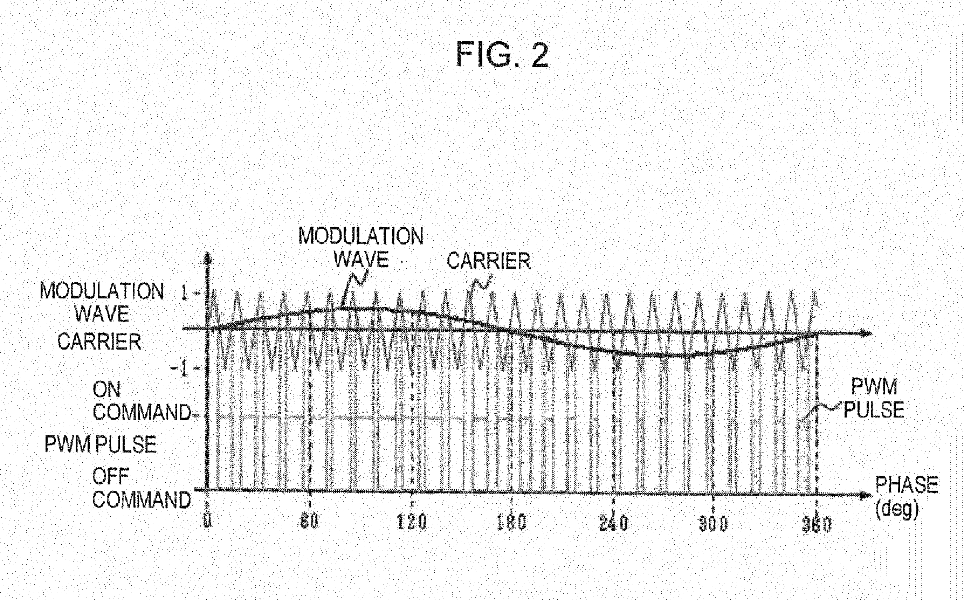

Further, the inverter device for railway vehicles, as shown in FIG. 1, outputs the alternating-current voltage while switching among three types of PWM methods of an asynchronous mode, a synchronous mode and a one-pulse mode. FIGs. 2 to 6 show waveforms by the PWM methods in the respective control modes.

FIG. 2 shows, for one phase of the three-phase alternating-current, a modulation wave in which a command value of the alternating-current voltage is normalized by the direct-current side voltage of the inverter device, a carrier in a triangular waveform, and PWM pulses that are ON-OFF commands to the switching elements of the inverter device. As the figure, based on the magnitude relation of the modulation wave and the carrier, the PWM pulse becomes an ON command when the modulation wave is greater than the carrier, and becomes an OFF command when the modulation wave is less than the carrier.

In a region in which the frequency of the alternating-current voltage is low, the alternating-current voltage is output using an asynchronous PWM mode shown n FIG. 2 (hereinafter, referred to as an asynchronous mode).

The asynchronous mode is a method in which the phase relation of the modulation wave and the carrier is not fixed and the PWM pulse is generated using a carrier with a sufficiently high frequency relative to the frequency of the modulation wave.

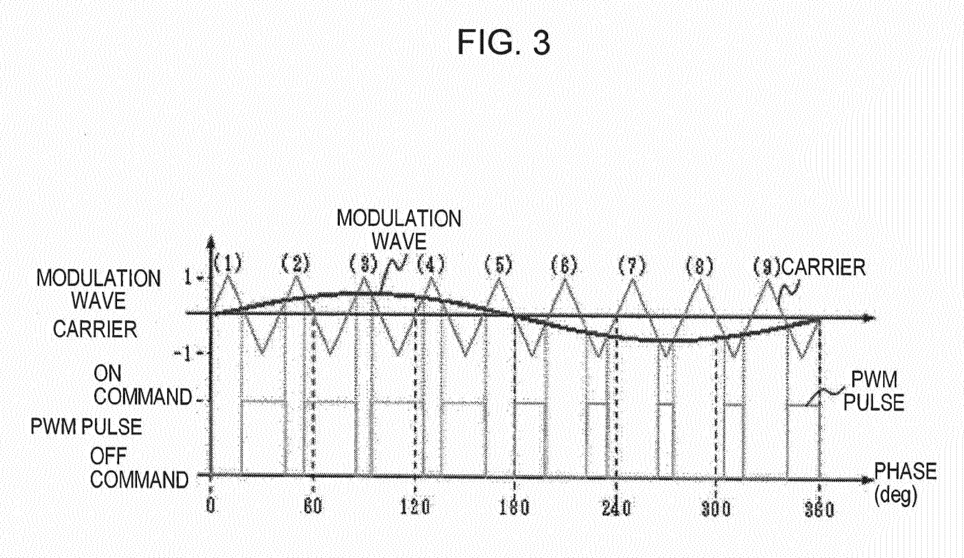

As for the asynchronous mode region, in a region in which the frequency of the modulation wave is low, since the frequency of the carrier is sufficiently high relative to the frequency of the modulation wave as shown in FIG. 2, the distortion of the alternating-current voltage is small. However, as the frequency of the modulation wave becomes high, the distortion of the alternating-current voltage becomes large. Therefore, when the frequency of the modulation wave becomes equal to or more than F1 in FIG. 1, a shift to a synchronous PWM mode (hereinafter, referred to as a synchronous mode) shown in FIG. 3 to FIG. 5 is performed.

The synchronous mode is a PWM method in which the carrier is assigned such that a predetermined phase relation holds between the modulation wave and the carrier, and the frequency of the carrier is increased in accordance with the frequency of the modulation wave. FIG. 3 shows a synchronous nine-pulse mode in which nine periods of the carrier are assigned in one period of the modulation wave. Railway vehicles generally use a synchronous mode in which a carrier with an odd multiple of three is assigned, because of the symmetry of three-phase alternating current.

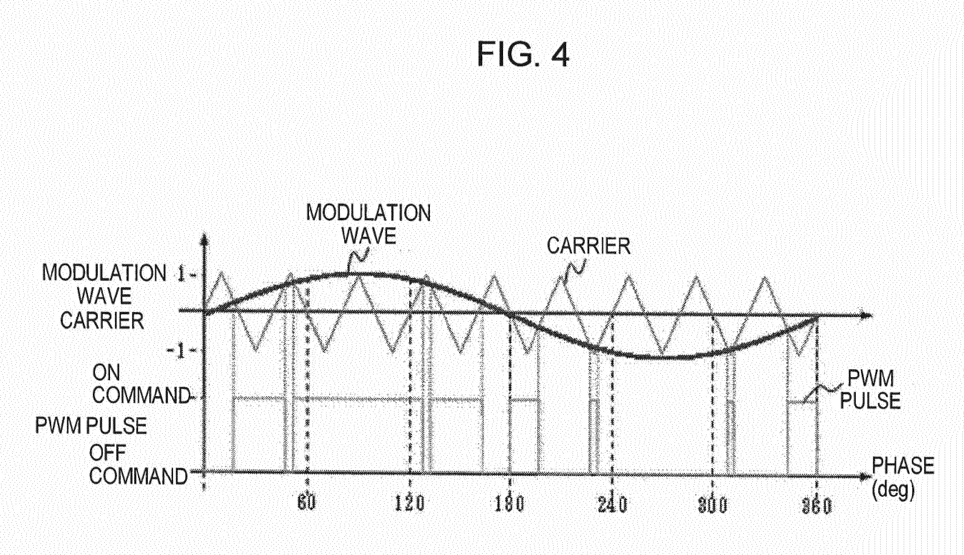

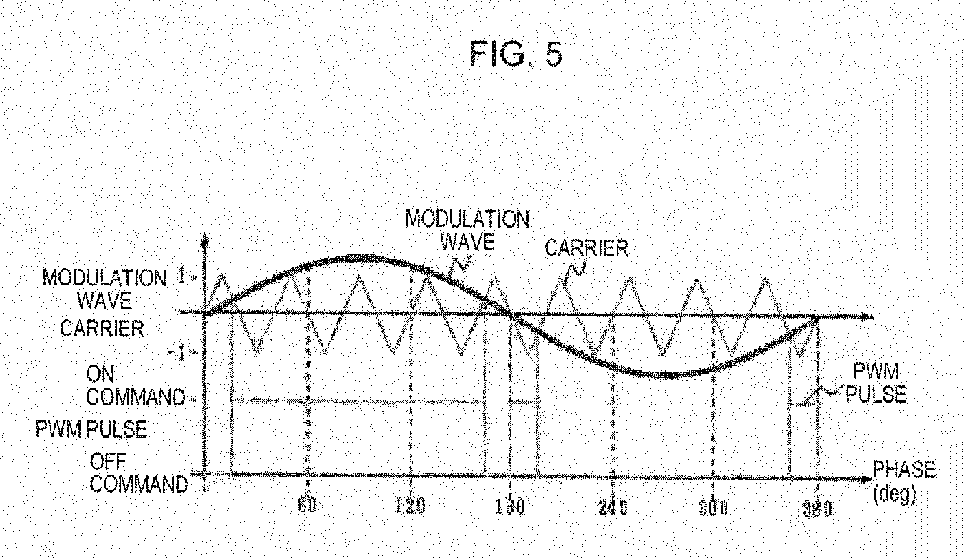

When the amplitude of the modulation wave becomes greater, regions in which the amplitude of the modulation wave is greater than the amplitude of the carrier appear as shown in FIGs. 4 and 5, and the number of PWM pulses per one period of the modulation wave decreases. The decreasing way of the number of PWM pulses is dependent on the phase relation of the modulation wave and the carrier, and in this case, the number of PWM pulses per one period of the modulation wave decreases to nine (FIG. 3), seven (FIG. 4) and three (FIG. 5).

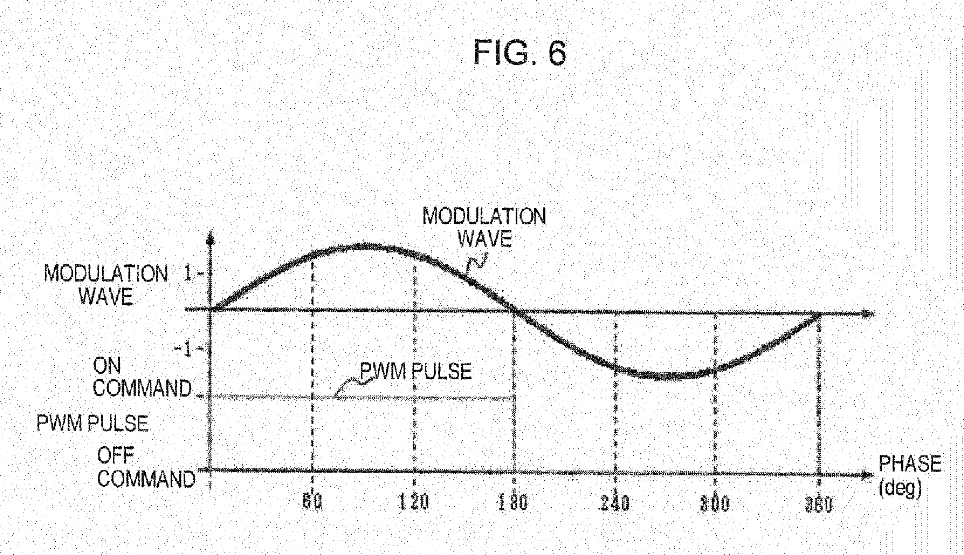

The amplitude of the modulation wave becoming the maximum leads to a one-pulse mode in which the switching between the ON command and the OFF command is performed only once in one period of the modulation wave, as shown in FIG. 6.

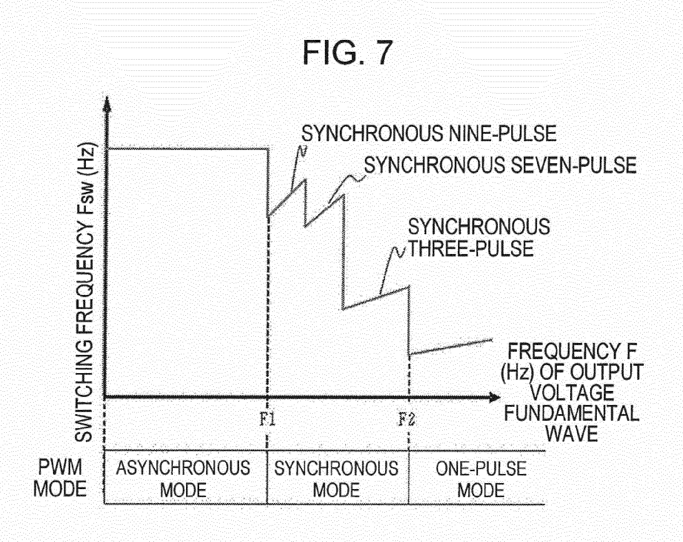

FIG. 7 shows a relation of the modulation ratio and the frequency at which the switching elements repeat the ON-OFF operation (hereinafter, the switching frequency), based on FIGs. 2 to 6.

The frequency of the carrier in the asynchronous mode and the condition (F1 in FIG. 1) for shifting from the asynchronous mode to the synchronous mode are dependent on the magnitude of the loss generated in the inverter device and the magnitude of the current ripple associated with the ON-OFF operation of the switching elements (SAISHIN DENKITETSUDOKOGAKU, edited by Education and Research Expert Committee on Electric Railway, the Institute of Electrical Engineers of Japan, CORONA PUBLISHING CO., LTD.).

Here, the switching elements generate the loss associated with the ON-OFF operation, and as the loss becomes greater, a higher cooling performance is required in the inverter device. Therefore, in terms of the switching loss of the inverter device, it is desirable that the switching frequency is low.

On the other hand, when the switching frequency becomes low relative to the frequency of the alternating-current voltage fundamental wave, the distortion of the alternating-current voltage is increased so that the motor efficiency is decreased. Therefore, in terms of the motor efficiency, it is desirable that the switching frequency is high.

Therefore, it is demanded to be independent of the switching frequency, suppress the distortion of the alternating-current voltage, and increase the motor efficiency.

The present invention has an object to provide an inverter device that can suppress the distortion factor of the alternating-current voltage and increase the efficiency of the motor.

JP H09 247953 A proposes a three-phase PWM scheme corresponding to the precharacterising clauses of claims 1 and 6, US 2002/008489 and US 2008/112695 propose further three-phase PWM schemes.

SUMMARY OF THE INVENTION

A first aspect of the present invention provides an inverter device according to claim 1, second aspect of the present invention provides an inverter control device according to claim 6.

According to the present invention, it is possible to provide an inverter device that can suppress the distortion factor of the alternating-current voltage to be supplied from the inverter device to a motor, and increase the efficiency of the motor.

BRIEF DESCRIPTION OF THE DRAWINGS

FIG. 1 is a diagram showing a relation of the frequency and the modulation ratio of an alternating-current voltage fundamental wave to be output by an inverter device;
FIG. 2 is a diagram showing a relation of a modulation wave, a carrier and PWM pulses in an asynchronous mode according to a conventional art;
FIG. 3 is a diagram showing a relation of a modulation wave, a carrier and PWM pulses in the case of generating nine pulses in a synchronous mode according to the conventional art;
FIG. 4 is a diagram showing a relation of a modulation wave, a carrier and PWM pulses in the case of generating seven pulses in the synchronous mode according to the conventional art;
FIG. 5 is a diagram showing a relation of a modulation wave, a carrier and PWM pulses in the case of generating three pulses in the synchronous mode according to the conventional art;
FIG. 6 is a diagram showing a relation of a modulation wave, a carrier and PWM pulses in a one-pulse mode according to the conventional mode;
FIG. 7 is a diagram showing a relation of the frequency of the output voltage fundamental wave and the switching frequency according to the conventional art;
FIG. 8 is a diagram showing a relation of the frequency of an output voltage fundamental wave and the switching frequency in an inverter device using switching elements with a high withstand voltage;
FIG. 9 is a diagram showing a relation of an alternating-current voltage fundamental wave and PWM pulses according to the present invention;
FIG. 10 is a diagram showing, for the three phases, relations of an alternating-current voltage fundamental wave and PWM pulses according to the present invention;
FIG. 11 is a diagram showing a relation of a modulation wave and a carrier in a synchronous nine-pulse mode according to the present invention;
FIG. 12 is a diagram showing a relation of the modulation wave, the carrier and PWM pulses in the synchronous nine-pulse mode according to the present invention;

FIG. 13 is a diagram showing, for the three phases, relations of the modulation wave, the carrier and PWM pulses in the synchronous nine-pulse mode according to the present invention;

FIG. 14 is a diagram showing a relation of the modulation ratio and the amplitude of the modulation wave in the synchronous nine-pulse mode according to the present invention;

FIG. 15 is a diagram showing PWM pulses when the modulation ratio is zero, in the synchronous nine-pulse mode according to the present invention;

FIG. 16 is a diagram showing PWM pulses for an arbitrary modulation ratio in the synchronous nine-pulse mode according to the present invention;

FIG. 17 is a diagram showing PWM pulses when the modulation ratio is 100%, in the synchronous nine-pulse mode according to the present invention;

FIG. 18 is a diagram showing a relation of a modulation wave, a carrier and PWM pulses in a synchronous seven-pulse mode according to the present invention;

FIG. 19 is a diagram showing a relation of a modulation wave, a carrier and PWM pulses in a synchronous five-pulse mode according to the present invention;

FIG. 20 is a diagram showing a relation of a modulation wave, a carrier and PWM pulses in a synchronous three-pulse mode according to the present invention;

FIG. 21 is a table for comparing the distortion factor of the alternating current between the synchronous mode according to the conventional art and the synchronous mode according to the present invention;

FIG. 22 is a diagram showing an example of the circuit configuration of an inverter device according to the present invention;

FIG. 23 is a diagram showing a relation of the frequency of an output voltage fundamental wave and the switching frequency when the synchronous mode control according to the present invention is implemented between the asynchronous mode and the one-pulse mode;

FIG. 24 is a diagram showing a relation of the frequency of an output voltage fundamental wave and the switching frequency, in the case where the synchronous mode according to the conventional art is implemented when the inverter device is restarted in a coasting state;

FIG. 25 is a diagram showing a line voltage between U-phase and V-phase in the synchronous nine-pulse mode according to the present invention; and

FIG. 26 is a diagram showing a line voltage between U-phase and V-phase when the synchronous mode according to the conventional art is implemented.

## DETAILED DESCRIPTION OF THE PREFERRED EMBODIMENTS

Next, embodiments of the present invention will be described.

[First Embodiment]

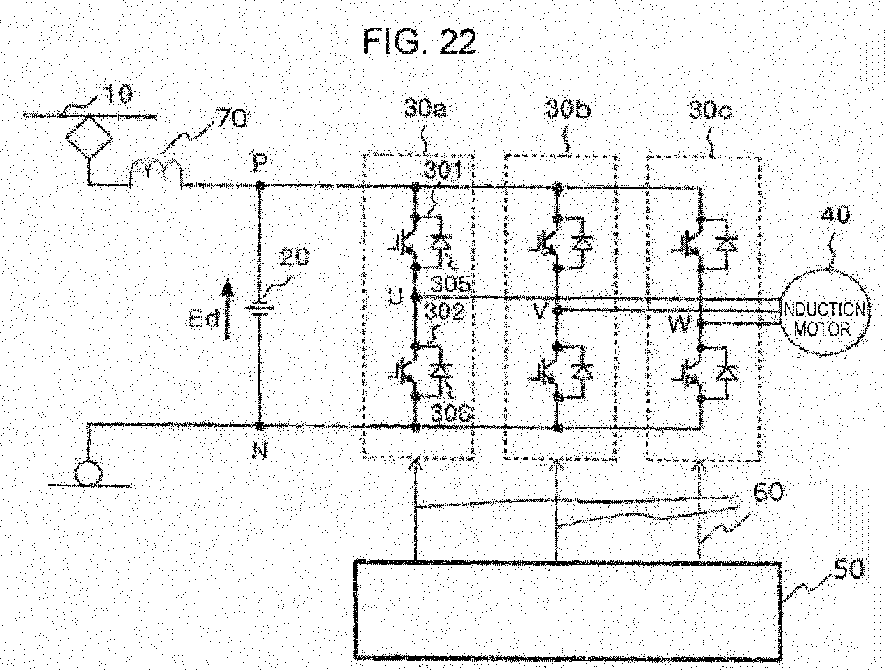

A first embodiment of an inverter control device of a railway vehicle according to the present invention will be described. FIG. 22 is a diagram showing an example of the circuit configuration of an inverter device according to the present invention. In the railway vehicle, the direct-current voltage supplied from a trolley wire 10 by a current contacting device is smoothed by a smoothing reactor 70 and a smoothing capacitor 20, and is applied to the inverter device. A switching circuit of the inverter device includes, for one phase, a circuit 30a in which a switching element 301 (upper arm) having a diode 305 connected in inverse parallel and a switching element 302 (lower arm) having a diode 306 connected in inverse parallel are connected in series, and is constituted by circuits (30a, 30b, 30c) for three phases of U-phase, V-phase and W-phase. In each phase, the connecting point between the upper arm and the lower arm is an alternating-current output to an alternating-current electric motor. An inverter control device 50 generates a PWM pulse command, and outputs a gate drive command 60 based on the PWM pulse command, to each switching element of the switching circuits (30a, 30b, 30c).

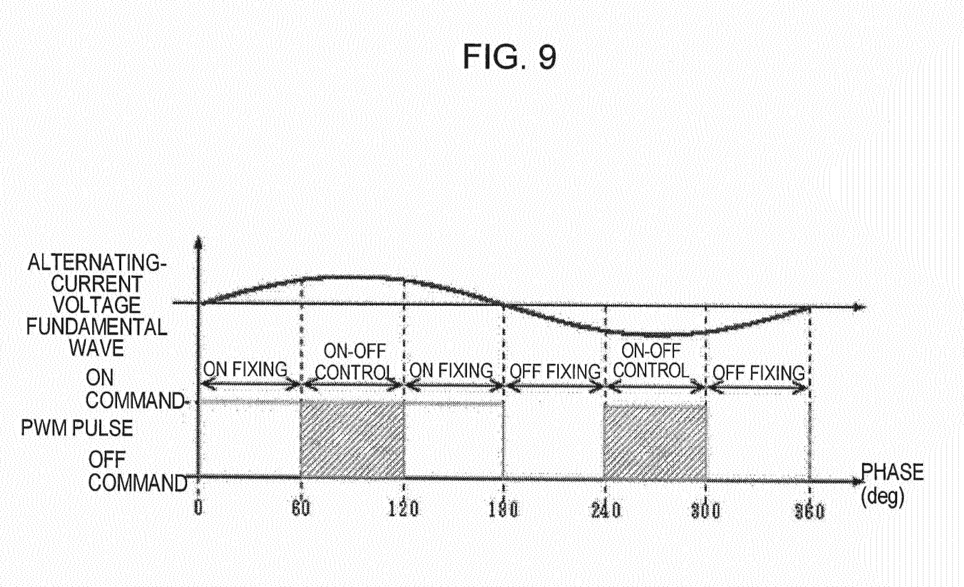

FIG. 9 shows a relation of an alternating-current voltage fundamental wave and PWM pulses according to the embodiment. Here, an alternating-current voltage fundamental wave and PWM pulses for one phase are shown. In the figure, the horizontal axis indicates the phase of the alternating-current voltage fundamental wave. The vertical axis indicates the amplitudes of the modulation wave and PWM pulses.

In a PWM method of the embodiment, as shown in FIG. 9, one period of the alternating-current voltage fundamental wave is divided into regions on a 60-degree basis, and the switching elements are controlled such that regions in which the ON-OFF control of the switching elements is performed (the ON-OFF control regions in the figure) are separated from regions in which the switching elements are held in the ON state (the ON fixing regions in the figure) and regions in which the switching elements are held in the OFF state (the OFF fixing regions in the figure). The operation in the regions in which the ON-OFF control is performed will be described later.

The ON fixing regions are the ranges of 0 degrees to 60 degrees and 120 degrees to 180 degrees in the phase of the alternating-current voltage fundamental wave, and the OFF fixing regions are the ranges of 180 degrees to 240 degrees and 300 degrees to 360 degrees. The ON-OFF control regions are the ranges of 60 degrees to 120 degrees and 240 degrees to 300 degrees.

Thus, in the PWM method according to the present invention, the ON-OFF control is performed in the phase regions containing the local maximum value or the local minimum value of the alternating-current voltage fundamental wave, and the ON fixing or OFF fixing control is performed in the other regions.

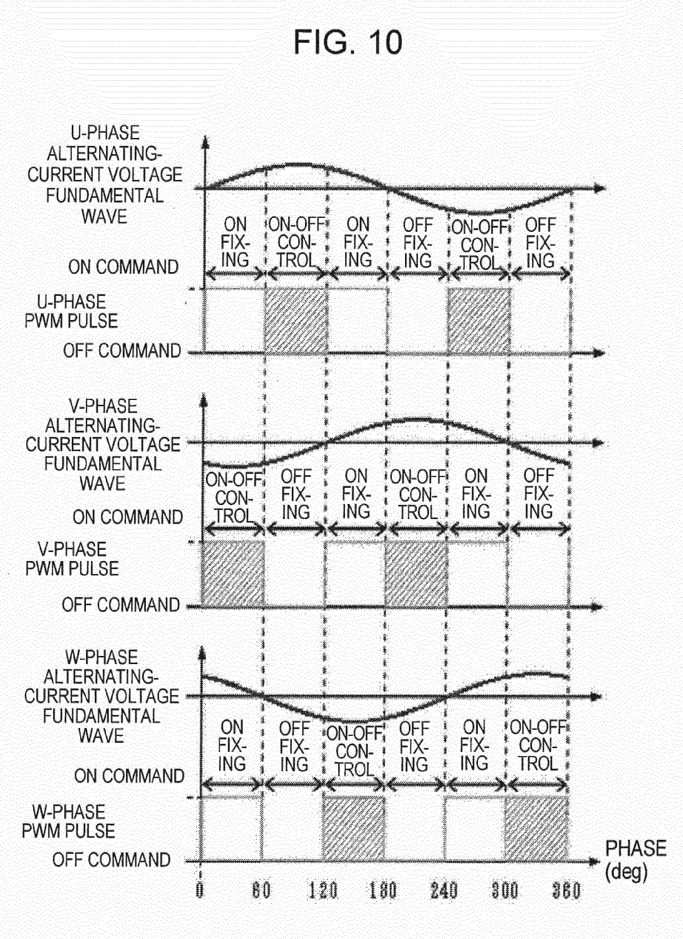

FIG. 10 shows relations of the modulation wave and PWM pulses for the three phases. Here, the three phases are U-phase, V-phase and W-phase, respectively, and on the basis of the alternating-current voltage fundamental wave in U-phase, V-phase is shown with a phase difference of -120 degrees and W-phase is shown with a phase difference of +120 degrees.

As shown in FIG. 10, in the PWM method according to the present invention, the ON-OFF control is performed in the regions containing the local maximum value or the local minimum value of the alternating-current voltage fundamental wave in each phase, and the ON fixing or OFF fixing control is performed in the other regions. Therefore, in each of the divided phase regions, the ON-OFF control is performed only in one phase of the three phases, and the other two phases are in the ON fixing or OFF fixing state.

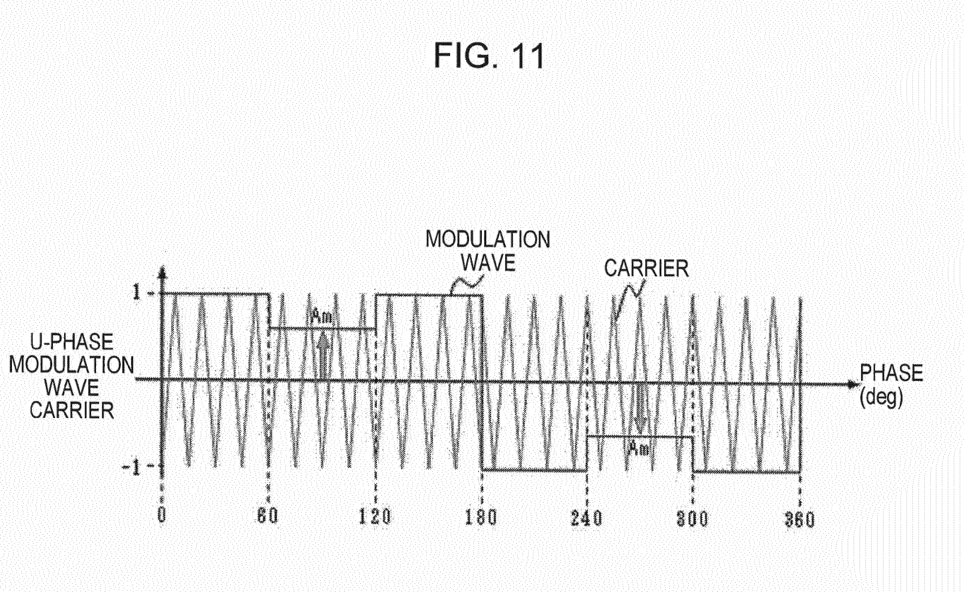

Next, the operation in the regions in which the ON-OFF control is performed will be concretely described. FIG. 11 shows, taking U-phase in FIG. 10 as an example, a relation of the modulation wave and the carrier when nine PWM pulses are contained in one period of the modulation wave. In the figure, the waveform shown by the thick line denotes the modulation wave, and the triangular waveform denotes the carrier. Hereinafter, this method is referred to as a synchronous nine-pulse mode in the present invention.

As shown in FIG. 11, twenty-four periods of the carrier are assigned in one period of the modulation wave, and the carrier is inverted between the region of 0 degrees to 180 degrees and the region of 180 degrees to 360 degrees.

Then, the amplitude Am of the modulation wave in the region of 60 degrees to 120 degrees and the region of 240 degrees to 300 degrees is regulated, and thereby the ON-OFF control is performed. Here, the polarity of Am is set inversely between the region of 60 degrees to 120 degrees and the region of 240 degrees to 300 degrees.

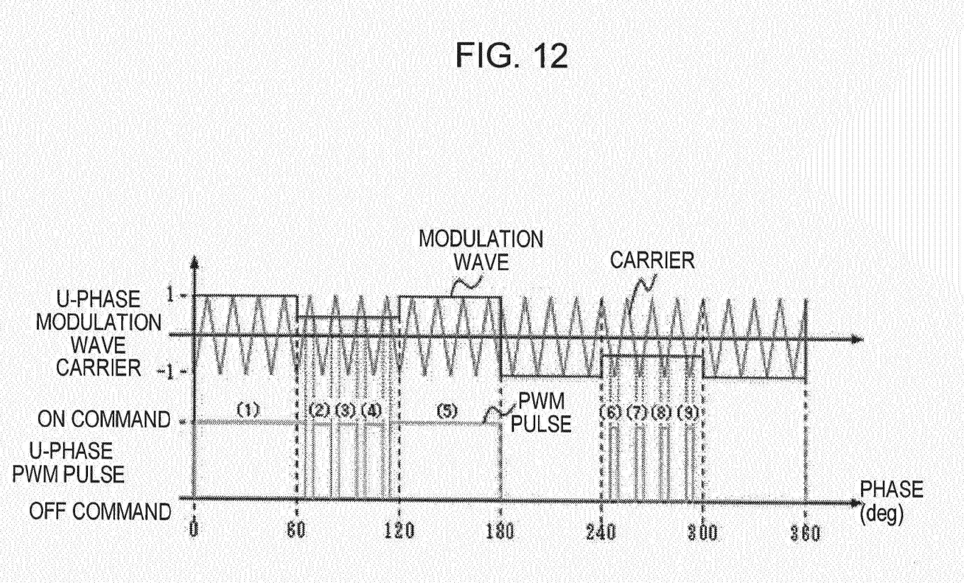

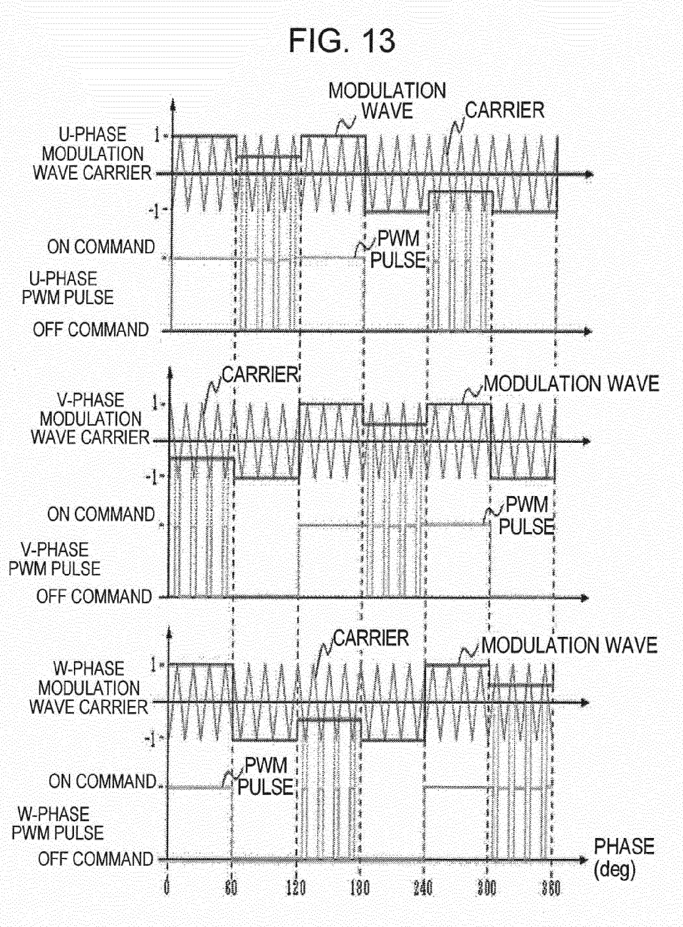

FIG. 12 shows PWM pulses that are generated from the relation of the modulation wave and the carrier in FIG. 11. As shown in FIG. 12, by the comparison between the modulation wave and the carrier, nine PWM pulses are generated in one period of the modulation wave. FIG. 13 shows the modulation wave, the carrier and the PWM pulses, for the three phases.

As shown in FIG. 11, when the modulation wave in the region in which the ON-OFF control is performed is shown by a straight line, as for the relation of the amplitude Am of the modulation wave and the modulation ratio Ym, Formula 1 holds.

[Formula 1]

$$Ym = 1 - 2 \cdot \cos\left(\frac{\pi}{3} + \frac{1+Am}{48} \cdot \pi\right) + 2 \cdot \sin\left(\frac{1+Am}{48} \cdot \pi\right) \cdot \left\{\sin\left(\frac{5 \cdot \pi}{12}\right) + \sin\left(\frac{\pi}{2}\right) + \sin\left(\frac{7 \cdot \pi}{12}\right)\right\} \quad \cdots (1)$$

where Am is in the range of -1 to 1.

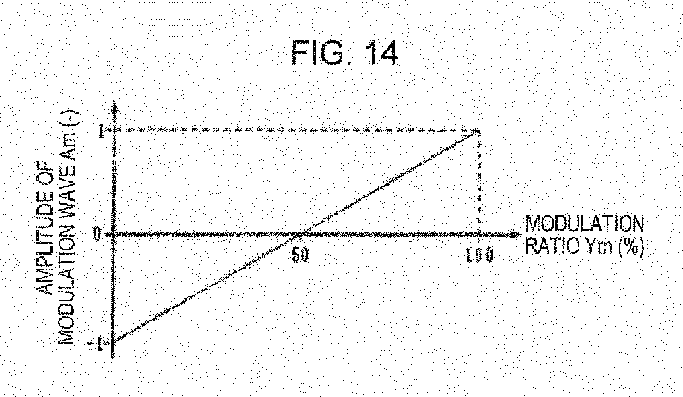

FIG. 14 illustrates the relation of the modulation ratio Ym and the amplitude Am of the modulation wave based on Formula 1. Based on this relation, the amplitude Am of the modulation wave is set corresponding to the modulation ratio Ym, and thereby, it is possible to output an intended alternating-current voltage of zero to the maximum voltage while holding the number of PWM pulses in one period of the modulation wave constant.

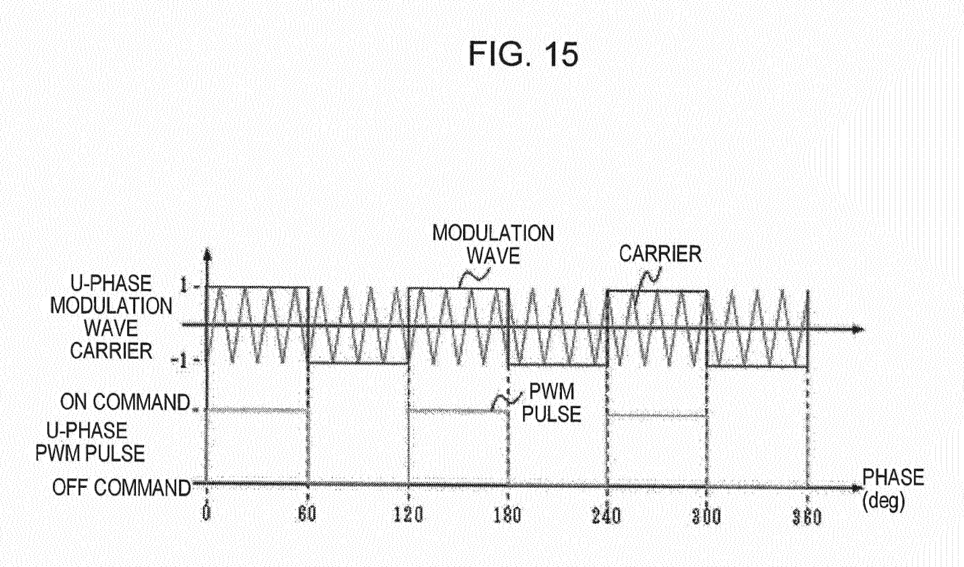

FIGs. 15 to 17 show PWM pulses when the amplitude Am of the modulation wave is changed from -1 to 1.

First, when the amplitude of the alternating-current voltage fundamental wave is zero, the modulation ratio Ym is zero, that is, the amplitude of the modulation wave is -1, and the OFF state is fixed in the region of 60 degrees to 120 degrees. In the region of 240 degrees to 300 degrees, since the carrier is inverted, the ON state is fixed. Therefore, in this case, the PWM pulses as shown in FIG. 15 are generated.

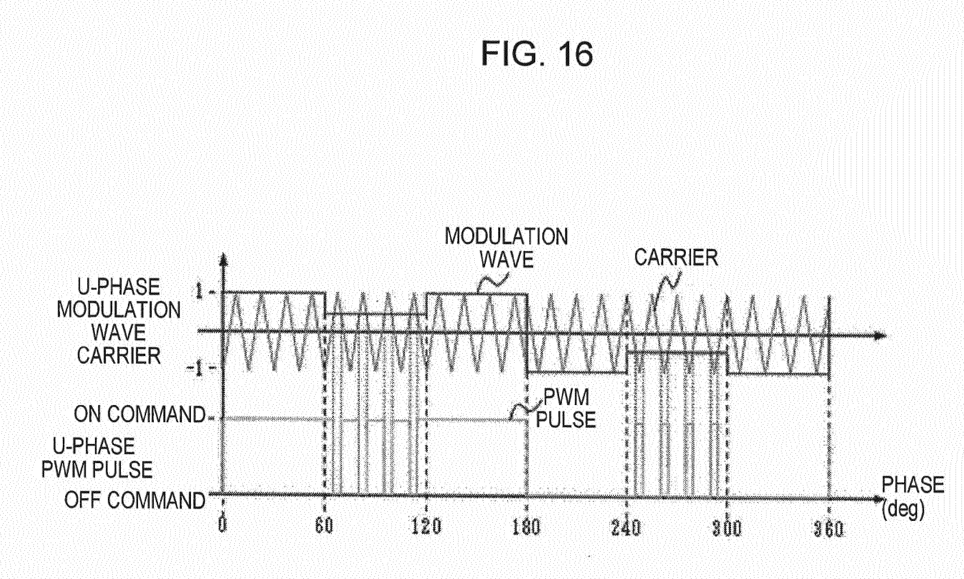

Next, when the amplitude of the modulation wave is between -1 and 1, as shown in FIG. 16, in the region in which the ON-OFF control is performed, the ON-OFF control is performed in response to the magnitude of the amplitude Am of the modulation wave.

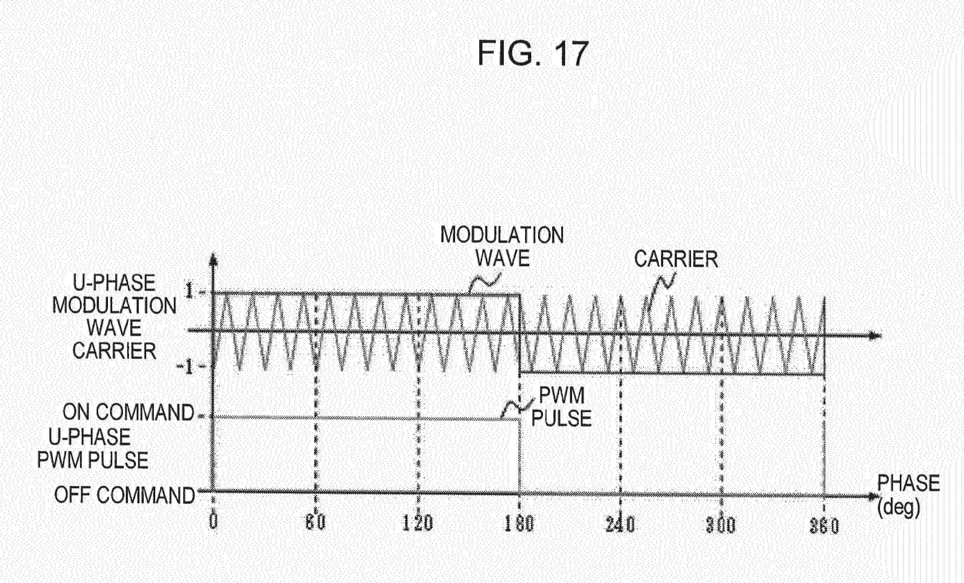

Then, when the amplitude of the alternating-current voltage fundamental wave is 1, the modulation ratio Ym is 100%, that is, the amplitude Am of the modulation wave is 1, and the ON state is fixed in the region of 60 degrees to 120 degrees. In the region of 240 degrees to 300 degrees, since the carrier is inverted, the OFF state is fixed. Therefore, the PWM pulses as shown in FIG. 17 are generated.

Although the modulation wave in the region in which the ON-OFF control is performed has been described here as a straight line, an arbitrary curved line such as a sine wave may be set. If a relation of the modulation ratio and the amplitude of the modulation wave is obtained as Formula 1 and FIG. 14, it is possible to output an intended voltage based on it.

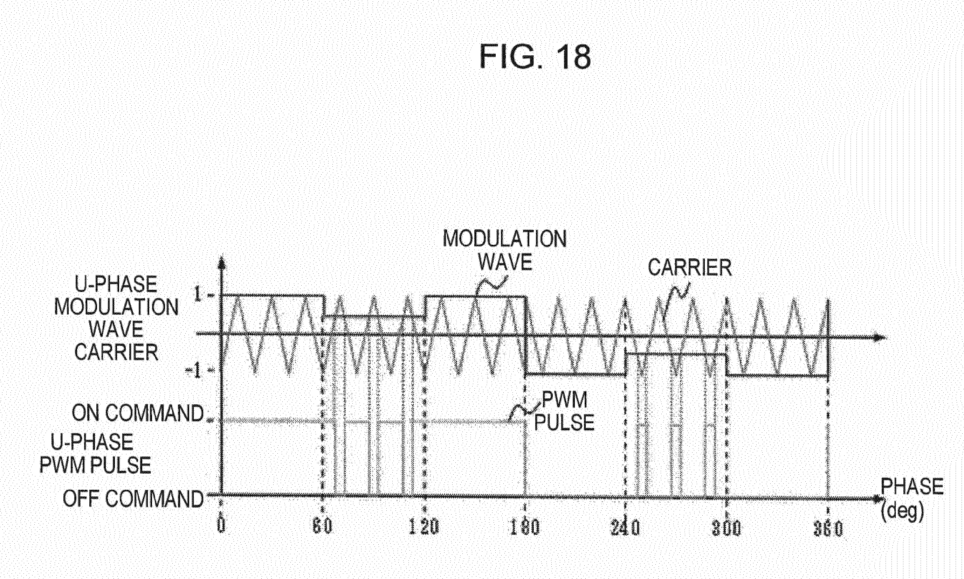

As shown in FIG. 18, when eighteen periods of the carrier are assigned in one period of the modulation wave and further the carrier is inverted between the region of 0 degrees to 180 degrees and the region of 180 degrees and 360 degrees, it is possible to implement a PWM method (a synchronous seven-pulse mode according to the present invention) in which seven PWM pulses are contained in one period of the modulation wave.

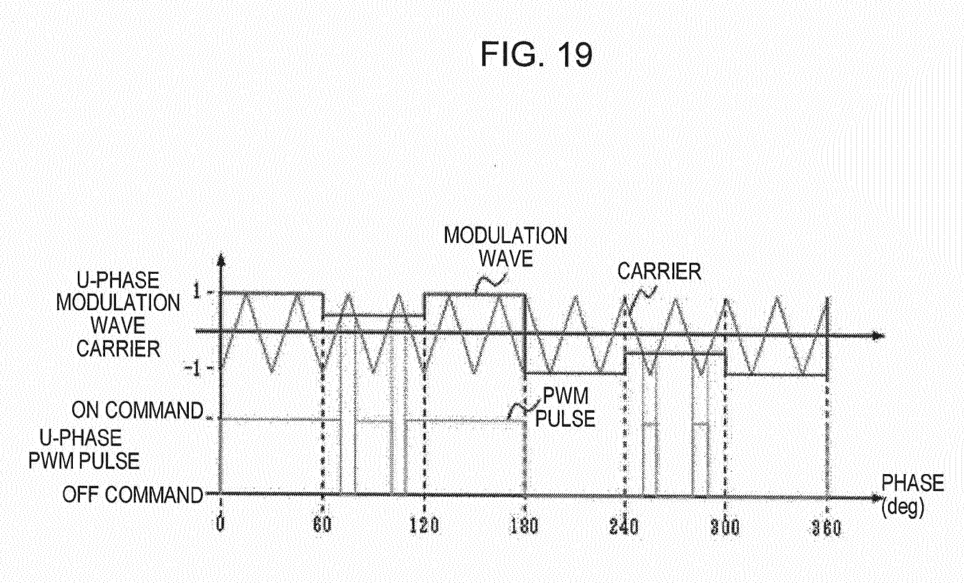

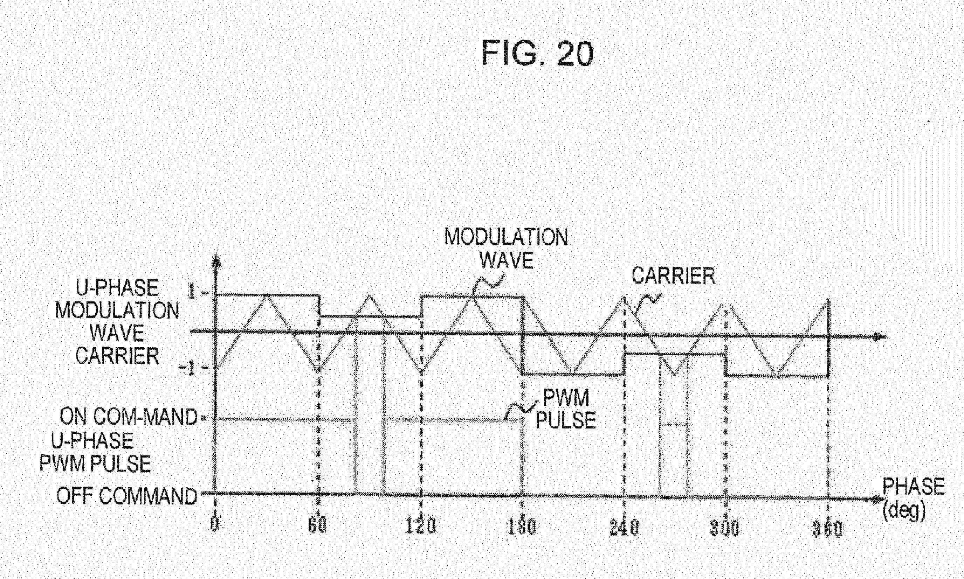

Similarly, it is possible to implement a synchronous five-pulse mode according to the present invention in which twelve periods of the carrier are assigned as shown in FIG. 19, and a synchronous three-pulse mode according to the present invention in which six periods of the carrier are assigned as shown in FIG. 20.

Similarly to the synchronous nine-pulse mode according to the present invention, in the above synchronous seven-pulse mode, synchronous five-pulse mode and synchronous three-pulse mode according to the present invention, it is possible to change the modulation ratio Ym from zero to 100% in accordance with the relation of the modulation ratio Ym and the amplitude Am of the modulation wave, and thereby, it is possible to output the alternating-current voltage from zero to the maximum.

Furthermore, although not shown in the drawings herein, it is possible to implement a PWM method in which the number of PWM pulses is increased, such as a synchronous eleven-pulse according to the present invention in which thirty periods of the carrier are assigned in one period of the modulation wave.

For confirming the effect of the present invention, assuming a direct-current electric railcar that runs along an overhead wire of DC 1500 V, the distortions of the alternating currents in the synchronous mode according to the conventional art and the synchronous mode according to the present invention were compared by simulation.

As the conventional art, the synchronous nine-pulse mode (FIG. 3), the synchronous seven-pulse mode (FIG. 4) and the synchronous three-pulse mode (FIG. 5) were set, and as the synchronous mode of the present invention, for equalizing the number of switching per one period of the modulation wave, the synchronous nine-pulse mode (FIG. 12), the synchronous seven-pulse mode (FIG. 18) and the synchronous three-pulse mode (FIG. 20) were set.

Further, for each pulse mode to be compared, the modulation ratio and the frequency of the alternating-current voltage fundamental wave were equally set, and the distortion factor was calculated for the fifth-order, seventh-order, eleventh-order, thirteenth-order, seventeenth-order and nineteenth-order distortions, relative to the frequency of the alternating-current fundamental wave.

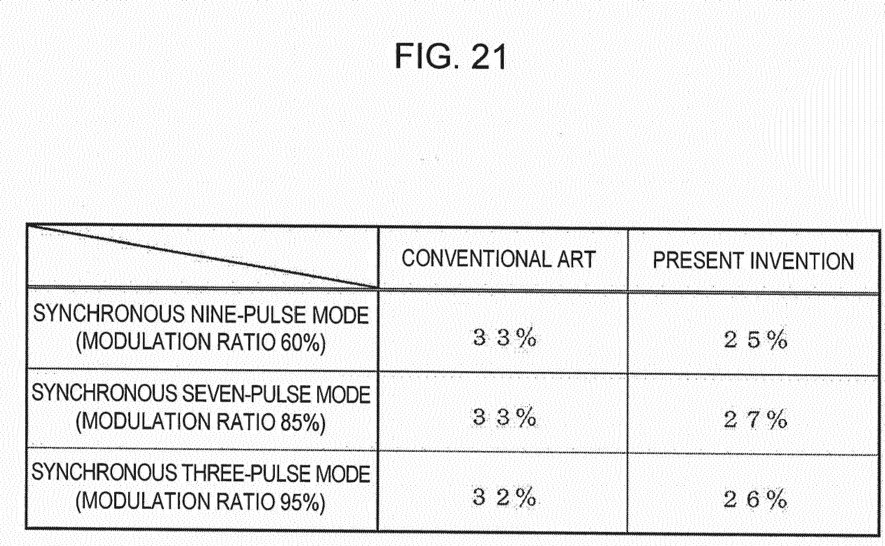

FIG. 21 shows a table of the comparison result. It is found that in all the conditions, the present invention has a low distortion factor relative to the conventional art.

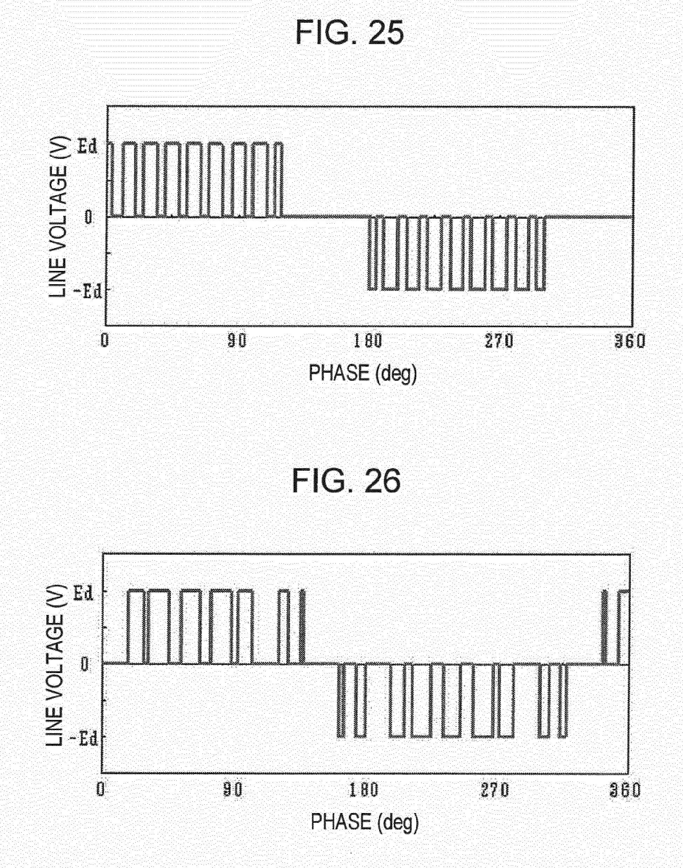

FIG. 25 shows a line voltage in the synchronous nine-pulse mode according to the embodiment. FIG. 25 shows a line voltage to be applied between U-phase and V-phase shown in FIG. 13, and the positive voltage shows a state in which the voltage of U-phase is higher than that of V-phase.

In the region in which the phase is 0 to 60, the ON state is fixed in U-phase, and the ON-OFF control is performed in V-phase. Therefore, when V-phase is in the OFF state, the line voltage is Ed, and when V-phase is in the ON state, the line voltage is 0.

In the region in which the phase is 60 to 120, the ON-OFF control is performed in U-phase, and the OFF state is fixed in V-phase. Therefore, when U-phase is in the ON state, the line voltage is Ed, and when U-phase is in the OFF state, the line voltage is 0.

In the region in which the phase is 120 to 180, the ON state is fixed in both U-phase and V-phase. Therefore, the line voltage is 0.

In the region in which the phase is 180 to 240, the OFF state is fixed in U-phase, and the ON-OFF control is performed in V-phase. Therefore, when V-phase is in the ON state, the line voltage is -Ed, and when V-phase is in the OFF state, the line voltage is 0.

In the region in which the phase is 240 to 300, the ON-OFF control is performed in U-phase, and the ON state is fixed in V-phase. Therefore, when U-phase is in the ON state, the line voltage is 0, and when U-phase is in the OFF state, the line voltage is -Ed.

In the region in which the phase is 300 to 360, the OFF state is fixed in both U-phase and V-phase. Therefore, the line voltage is 0.

As for the line voltage in the embodiment as shown in FIG. 25, in the region in which the ON-OFF operation of the line voltage is performed between 0 and Ed (the region in which the phase is 0 to 120), the voltage is output at equal intervals except both ends. Similarly, in the region in which the switching of the line voltage is performed between -Ed and 0 (the region in which the phase is 180 to 300), the voltage is output at equal intervals except both ends.

That is, in the phase region in which the switching elements in the other phases output the ON or OFF fixed voltage, the switching control is performed in response to the amplitude of the alternating-current voltage command, and in the phase region in which the switching elements in the other phases perform the switching operation, the switching elements output the ON or OFF fixed voltage. By performing such a control, a pulse waveform with the same width as the switching control of the switching elements for one phase appears as the line voltage. Therefore, by setting the modulation wave in the region in which the ON-OFF control is performed, as a straight line, and equalizing the intervals of pulse widths of the switching for one phase, it is possible to make the pulse width of the line voltage also be a constant width.

On the other hand, in the line voltage in the synchronous nine-pulse mode according to the conventional art as shown in FIG. 3, the intervals of the ON-OFF operation are not equal as shown in FIG. 26, and thereby, the alternating current ripple associated with the ON-OFF operation varies in magnitude. Therefore, since the alternating current ripple associated with the ON-OFF operation, in the embodiment, does not vary in magnitude compared to the conventional art, it is possible to unify the magnitude of the alternating current ripple associated with the ON-OFF operation on average and suppress the distortion of the alternating current.

In the case of setting the modulation wave in the region in which the ON-OFF control is performed not as a straight line but as an arbitrary curved line such as a sine wave, the widths of switching pulses for one phase are not constant and vary. However, even if such a case, the pulse waveform in the phase region in which the phase of the line voltage between U-phase and V-phase is 0 to 60 is dependent on the switching waveform in V-phase, and the pulse waveform in the phase region of 60 to 120 is dependent on the switching waveform in U-phase. Therefore, the pulse waveform of the line voltage is line-symmetric centering on the peak, and it is possible to suppress the alternating current ripple compared to the conventional art.

That is, as shown in the above mentioned embodiment, particularly, in FIG. 10, in the phase region in which the switching elements in the other phases output the OFF or ON fixed voltage, the switching control is performed in response to the amplitude of the alternating-current voltage command, and in the region in which the switching elements in the other phases perform the switching operation, the switching elements output the ON or OFF fixed voltage, and thereby, it is possible to suppress the distortion of the alternating-current voltage.

Therefore, in the above mentioned embodiment, although it has been described that the region of 60 degrees to 120 degrees and the region of 240 degrees to 300 degrees are the phase regions in which the ON-OFF control is performed and the ON-OFF control is performed by regulating the amplitude Am of the modulation wave, it is not always necessary to perform the switching control in the whole region of 60 degrees to 120 degrees and 240 degrees to 300 degrees. If the switching control is performed in the region containing the local maximum value or local minimum value of the alternating-current voltage fundamental wave, the pulse waveform of the line voltage becomes line-symmetric centering on the peak value of the line voltage, and thereby, it is possible to achieve at least the effect of suppressing the distortion of the alternating-current voltage compared to the conventional art. Even when the region of the switching control is set to the inside of the phase regions in question (to regions of 70 degrees to 110 degrees and 250 degrees to 290 degrees), the effect of the present invention can be achieved.

Here, the switching elements generate the loss associated with the ON-OFF operation, and as the loss becomes greater, a higher cooling performance is required in the inverter device. Therefore, in terms of the loss generation, it is desirable that the switching frequency is low.

On the other hand, when the switching frequency becomes low, the current ripple to be superimposed on the three-phase alternating current becomes greater. Therefore, in terms of the suppression of the current ripple, it is desirable that the switching frequency is high.

Therefore, generally, in consideration of both the switching loss and the current ripple, the frequency of the carrier in the inverter device is set such that the switching frequency is in a predetermined range.

By the way, in a switching element of an inverter device, a withstand voltage corresponding to the direct-current side voltage of the inverter device is required. In railway vehicles, the direct-current side voltage of the inverter device is about 600 V to 3000 V, depending on specifications of overhead wires and vehicles, and as the direct-current side voltage becomes higher, a switching element with a higher withstand voltage is required.

In a switching element with a high withstand voltage, for satisfying the withstand voltage specification, it is necessary to increase the thickness of a semiconductor chip within the element, and as a result, the loss associated with the switching operation increases compared to a switching element with a low withstand voltage. Therefore, in an inverter device using the switching element with a high withstand voltage, it is necessary to decrease the frequency of the carrier, for suppressing the loss associated with the switching operation.

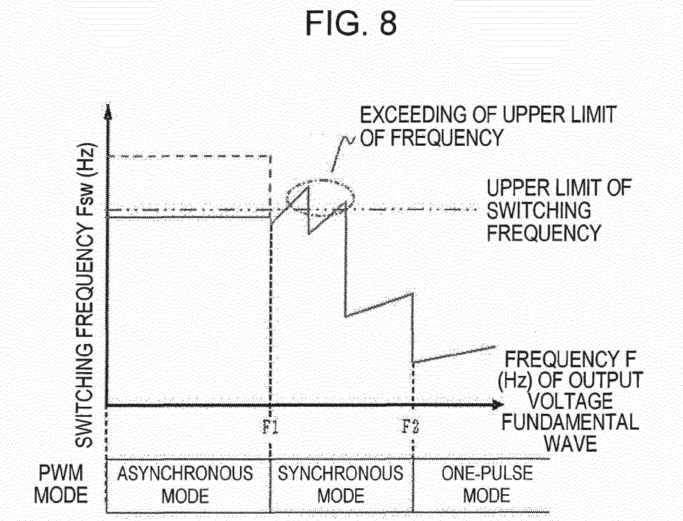

FIG. 8 shows an example in which the upper limit of the switching frequency is decreased in conformity to the switching element with a high withstand voltage, relative to the relation of the modulation ratio and the switching frequency in FIG. 7.

The broken line in FIG. 8 denotes the upper limit of the switching frequency. In the asynchronous mode, it is possible to decrease the switching frequency by decreasing the frequency of the carrier. On the other hand, in the case of the synchronous mode, there is a possibility that, by the increase in the frequency of the output voltage fundamental wave as shown in FIG. 7, the switching frequency exceeds the upper limit value depending on the condition, and this is undesirable in the thermal design of the inverter device.

In the synchronous mode to be used for railway vehicles, as described above, in many cases, the period number of the carrier in one period of the modulation wave is set as an odd multiple of three (three, nine, fifteen, ...), and, based on this viewpoint, it is possible that the synchronous nine-pulse mode is directly switched to the synchronous three-pulse mode. However, in this case, the switching frequency decreases shortly after the synchronous nine-pulse mode is switched to the synchronous three-pulse mode, and thereby, there is a possibility that the alternating current ripple increases, resulting in an exceeding of the current capacity of the switching element.

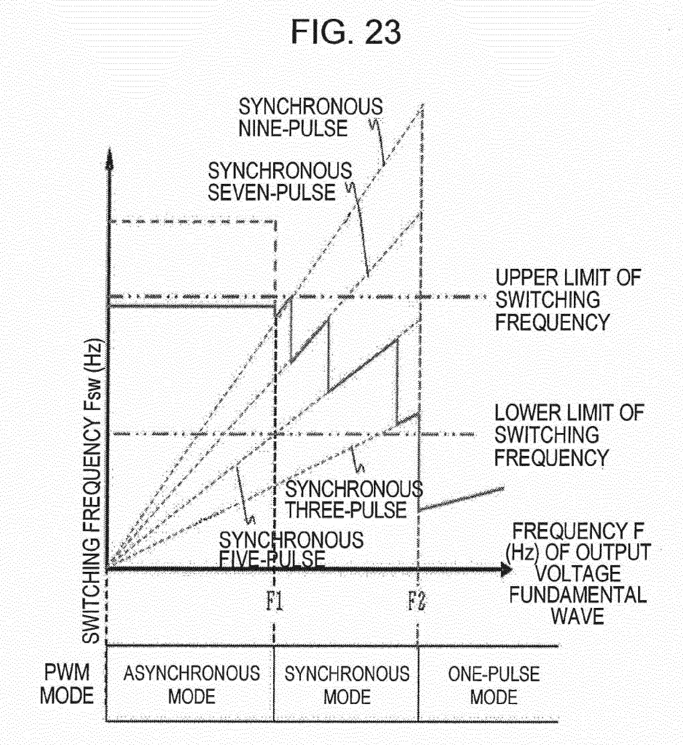

Thus, in the inverter device using the switching element with a high withstand voltage, it is necessary to switch the PWM method while suppressing the loss in the switching element and the alternating current ripple. That is, as shown in FIG. 23, the requirement for the loss in the switching element determines the upper limit value of the switching frequency, and the requirement for the suppression of the alternating current ripple determines the lower limit value of the switching frequency. Therefore, it is necessary to implement the control between the upper limit value and lower limit value of the switching frequency.

Hence, as the above mentioned embodiment, by including the multiple pulse modes (nine, seven, five and three pulses, for example) that differ in the number of pulses in one period of the modulation wave, and performing the control to regulate the pulse width in a specific switching phase region so as to output an amplitude of an arbitrary alternating-current voltage effective value, it is possible to switch the pulse mode with an amplitude of an arbitrary alternating-current voltage effective value.

Therefore, it is possible to switch the pulse mode among the synchronous nine-pulse mode, the synchronous seven-pulse mode, the synchronous five-pulse mode and the synchronous three-pulse mode, at an arbitrary timing, and as shown in FIG. 23, it is possible to switch the pulse mode, so as not to exceed the upper limit of the switching frequency that is subject to the restriction by the loss generation in the inverter device, and further so as not to fall below the lower limit of the switching frequency that is subject to the restriction by the current ripple in the inverter device.

In the synchronous pulse mode control described in the embodiment, as shown in FIG. 23, the problem of exceeding the upper limit of the switching frequency and the problem of falling below the lower limit of the switching frequency are problems that occur notably in the synchronous mode between the asynchronous mode and the one-pulse mode. Therefore, by interposing the synchronous pulse mode control according to the present invention between the frequency regions of the asynchronous mode and the one-pulse mode, it is possible to solve the above described problems between the asynchronous mode and the one-pulse mode.

A railway vehicle performs such a running as to accelerate the vehicle up to a certain speed and thereafter stop the inverter, and then to restart the inverter in a state of running by coasting (hereinafter, referred to as a coasting traveling) and perform an acceleration or deceleration. When the inverter is restarted in this way, the frequency of the alternating-current voltage fundamental wave to be output from the inverter is increased in response to the vehicle speed at the time of the coasting.

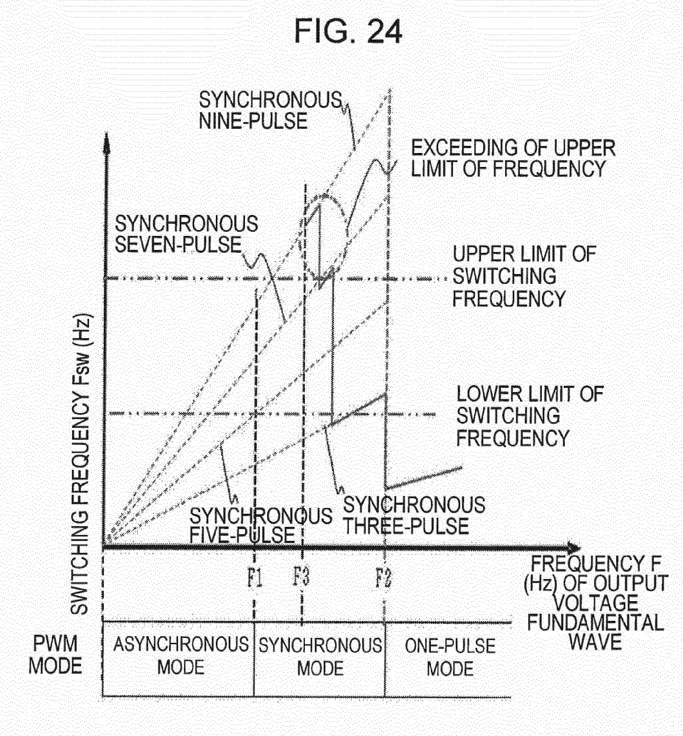

When the inverter is restarted, the alternating-current voltage needs to be increased from zero to an intended value. For example, in the case where the alternating-current voltage is increased from zero to the intended value by the conventional synchronous mode shown in FIGs. 3 to 5, the amplitude of the modulation wave needs to be gradually increased from zero as shown in FIG. 1, and therefore, the number of pulses to be contained in one period of the alternating-current voltage fundamental wave is changed to nine pulses, seven pluses and three pulses, with the increase in the alternating-current voltage. Therefore, as shown in FIG. 24, in the condition that the vehicle speed at the time of the inverter restart corresponds to the frequency F3, the problem of exceeding the upper limit of the switching frequency occurs in the synchronous nine-pulse and the synchronous seven-pulse.

Therefore, in the case of performing the coasting traveling described above, for reducing the loss in the switching element, there is a need for a PWM control that allows for an output of zero voltage to the maximum voltage while keeping the switching frequency at the upper limit or less.

Next, in the case where the alternating-current voltage is increased from zero to the intended value by the conventional asynchronous mode shown in FIG. 2, in the condition that the vehicle speed at the time of the inverter restart corresponds to the frequency F3, the control in the asynchronous mode is performed in a region in which the output voltage fundamental wave has a higher frequency than the frequency F1, and this creates a problem in that a great distortion occurs in the alternating-current voltage because of an insufficiency of the frequency of the carrier relative to the frequency of the alternating-current voltage fundamental wave. When the distortion of the alternating-current voltage increases, there is a fear that the motor torque vibrates so that the riding comfort in the vehicle is worsened, or excessive current flows in the inverter device so that the inverter device is stopped.

Therefore, in the case of performing the coasting traveling described above, for suppressing the distortion of the alternating-current voltage, there is a need for a PWM control that allows for an output of zero voltage to the maximum voltage while keeping the switching frequency relative to the frequency of the alternating-current voltage fundamental wave at a predetermined value or more.

Then, in the embodiment, by the PWM control in which the region for the ON fixing is set to the ranges of 0 degrees to 60 degrees and 120 degrees to 180 degrees in the phase of the alternating-current voltage fundamental wave, the region for the OFF fixing is set to the ranges of 180 degrees to 240 degrees and 300 degrees to 360 degrees, and the region for the ON-OFF control is set to the ranges of 60 degrees to 120 degrees and 240 degrees to 300 degrees, it is possible to hold the number of PWM pulses per one period of the modulation wave constant, and to regulate the alternating-current voltage to be output, from zero to the maximum.

That is, it is possible to control the alternating-current voltage from zero to the maximum, by the number of PWM pluses that does not exceed the upper limit of the switching frequency, and to suppress the distortion of the alternating-current voltage, compared to the case of starting the inverter device in the asynchronous mode with the increase in the modulation ratio as shown in FIG. 1.

The problems described here are problems that occur notably in the case where the vehicle restarts the inverter in the coasting traveling to accelerate or decelerate. Therefore, preferably, the synchronous pulse mode control according to the present invention should be applied to the case where the vehicle restarts the inverter in the coasting traveling to accelerate or decelerate. Thereby, it is possible to solve the above mentioned problems in the case where the vehicle restarts the inverter in the coasting traveling to accelerate or decelerate.

In the above mentioned embodiment, the railway vehicle has been described as an example, but the present invention can be applied to inverter devices involving the technique to suppress the distortion of the alternating-current voltage and increase the motor efficiency, and therefore, without being limited to railway vehicles, is a technique useful for all inverter devices regardless of fields.

## Claims

1. An inverter device comprising switching circuits for three phases and converting a direct-current (DC) voltage into a three-phase alternating-current (AC) voltage, each of the switching circuits having two switching elements connected in series and having a connecting point as an AC output,
   wherein the inverter device has a synchronous control mode to perform ON-OFF control of the switching elements for each phase in response to an amplitude command of the AC voltage, each phase having an AC voltage fundamental wave with a phase period of 360-degrees in which a predetermined phase region from 60-degrees to 120-degrees contains a local maximum value of the AC voltage fundamental and a further predetermined phase region from 240-degrees to 300-degrees contains a local minimum value of the AC voltage fundamental,
   **characterised in that**:

   the switching elements are ON-OFF controlled based on pulse-width modulation in said predetermined phase regions, the switching elements being held in an ON state in the phase regions from 0-degrees to 60-degrees and from 120-degrees to 180-degrees, and the switching elements being held in an OFF state in the phase regions from 180-degrees to 240-degrees and from 300-degrees to 360-degrees, and
   at any one time the switching elements for two of the phases are held in the ON or the OFF state and the third phase is in one of its predetermined phase regions.

2. The inverter device according to claim 1,
   wherein, in the synchronous control mode, the inverter device can regulate the AC voltage from zero to a maximum voltage, by regulating an interval between an ON state and an OFF state in the predetermined phase regions in which the ON-OFF control of the switching elements for each phase is performed.

3. The inverter device according to claim 1 or 2, which:

   performs control in an asynchronous mode to generate a carrier and a modulation wave asynchronously, in a region in which an output voltage fundamental wave has a low frequency,
   performs control in a one-pulse mode to output one pulse in one period of the output voltage fundamental wave, in a region in which the output voltage fundamental wave has a high frequency, and
   performs control in the synchronous control mode, in a region in which the output voltage fundamental wave has a frequency between the asynchronous mode and the one-pulse mode.

4. The inverter device according to claim 1,
   wherein the three-phase AC voltage of the inverter device is supplied to an electric motor that drives a vehicle, and in a case where, after the vehicle stops switching of the inverter device while running and then runs by coasting, the vehicle restarts the inverter device to accelerate or decelerate, and the inverter device gradually increases the AC voltage to the electric motor, in the synchronous control mode.

5. A railway vehicle comprising: the inverter device according to any one of claims 1 to 4; a smoothing capacitor to supply a DC voltage to the inverter device; and an AC electric motor to be driven by a three-phase AC power that the inverter device outputs,
wherein the railway vehicle runs by driving a wheel with the AC electric motor.

6. An inverter control device that controls an inverter device comprising switching circuits for three phases and converting a direct-current (DC) voltage into a three-phase alternating-current (AC) voltage, each of the switching circuits having two switching elements connected in series and having a connecting point as an AC output,
wherein the inverter control device has a synchronous control mode for outputting a gate drive command to perform ON-OFF control of the switching elements for each phase in response to an amplitude command of the AC voltage, each phase having an AC voltage fundamental wave with a phase period of 360-degrees in which a predetermined phase region from 60-degrees to 120-degrees contains a local maximum value of the AC voltage fundamental and a further predetermined phase region from 240-degrees to 300-degrees contains a local minimum value of the AC voltage fundamental,
**characterised in that**:

the switching elements are ON-OFF controlled based on pulse-width modulation in said predetermined phase regions, the switching elements being held in an ON state in the phase regions from 0-degrees to 60-degrees and from 120-degrees to 180-degrees, and the switching elements being held in an OFF state in the phase regions from 180-degrees to 240-degrees and from 300-degrees to 360-degrees, and
at any one time the switching elements for two of the phases are held in the ON or the OFF state and the third phase is in one of its predetermined phase regions.

7. The inverter control device according to claim 6,
which, in the synchronous control mode, can regulate the AC voltage from zero to a maximum voltage, by regulating an interval between an ON state and an OFF state in the predetermined phase regions in which the ON-OFF control of the switching elements for each phase is performed.

8. The inverter control device according to claim 6 or 7, which:

performs control in an asynchronous mode to generate a carrier and a modulation wave asynchronously, in a region in which an output voltage fundamental wave has a low frequency,
performs control in a one-pulse mode to output one pulse in one period of the output voltage fundamental wave, in a region in which the output voltage fundamental wave has a high frequency, and
performs control in the synchronous control mode, in a region in which the output voltage fundamental wave has a frequency between the asynchronous mode and the one-pulse mode.

9. The inverter control device according to claim 6,
wherein the three-phase AC voltage of the inverter device is supplied to an electric motor that drives a vehicle, and in a case where, after the vehicle stops switching of the inverter device while running and then runs by coasting, the vehicle restarts the inverter device to accelerate or decelerate, and the inverter control device gradually increases the AC voltage to the electric motor, in the synchronous control mode.

**Patentansprüche**

1. Wechselrichtervorrichtung, umfassend Schalt-Schaltkreise für drei Phasen und das Umwandeln einer Gleich (DC) -Spannung in eine Drei-Phasen-Wechsel(AC) -Spannung, wobei jeder der Schalt-Schaltkreise zwei Schaltelemente aufweist, die in Serie geschaltet sind und einen Verbindungspunkt als einen Wechselstromausgang aufweisen,
wobei die Wechselrichtervorrichtung einen synchronen Steuermodus aufweist, um eine EIN-AUS -Steuerung der Schaltelemente für jede Phase als Reaktion auf einen Amplitudenbefehl der Wechselspannung auszuführen, wobei jede Phase eine Wechselspannungsgrundwelle mit einer Phasenperiode von 360 Grad aufweist, in der eine vorbestimmte Phasenregion von 60 Grad bis 120 Grad einen lokalen Maximalwert der Wechselspannungsgrundschwingung enthält, und eine weitere vorbestimmte Phasenregion von 240 Grad bis 300 Grad einen lokalen Minimalwert der Wechselspannungsgrundschwingung enthält,
**dadurch gekennzeichnet,**
**dass** die Schaltelemente auf Basis einer Impulsbreitenmodulation in den vorbestimmten Phasenregionen EIN-AUS -gesteuert sind, wobei die Schaltelemente in den Phasenregionen von 0 Grad bis 60 Grad und von 120 Grad bis 180 Grad in einem EIN-Zustand gehalten werden, und die Schaltelemente in den Phasenregionen von 180 Grad bis 240 Grad und von 300 Grad bis 360 Grad in einem AUS-Zustand gehalten werden, und

**dass** zu einem beliebigen Zeitpunkt die Schaltelemente für zwei der Phasen in dem EIN- oder dem AUS-Zustand gehalten werden, und die dritte Phase sich in einer von ihren vorbestimmten Phasenregionen befindet.

2. Wechselrichtervorrichtung gemäß Anspruch 1,
wobei die Wechselrichtervorrichtung im synchronen Steuermodus die Wechselspannung von Null bis zu einer Maximalspannung regeln kann, und zwar durch Regeln eines Intervalls zwischen einem EIN-Zustand und einem AUS-Zustand in den vorbestimmten Phasenregionen, in denen die EIN-AUS -Steuerung der Schaltelemente für jede Phase ausgeführt wird.

3. Wechselrichtervorrichtung gemäß Anspruch 1 oder 2,
die eine Steuerung in einem asynchronen Modus ausführt, um eine Träger- und eine Modulations-Welle asynchron in einer Region zu erzeugen, in der eine Ausgangsspannungsgrundwelle eine niedrige Frequenz aufweist,
die eine Steuerung in einem Ein-Impuls-Modus ausführt, um in einer Periode der Ausgangsspannungsgrundwelle einen Impuls in einer Region auszugeben, in der die Ausgangsspannungsgrundwelle eine hohe Frequenz aufweist, und
die eine Steuerung in dem synchronen Steuermodus in einer Region ausführt, in der die Ausgangsspannungsgrundwelle eine Frequenz zwischen dem asynchronen Modus und dem Ein-Impuls-Modus aufweist.

4. Wechselrichtervorrichtung gemäß Anspruch 1,
wobei die Drei-Phasen-Wechselspannung der Wechselrichtervorrichtung einem Elektromotor zugeführt wird, der ein Fahrzeug antreibt, und
wobei in einem Fall, nachdem das Fahrzeug ein Schalten der Wechselrichtervorrichtung während des Fahrbetriebs anhält und danach im Leerlauf fährt, das Fahrzeug die Wechselrichtervorrichtung für ein Beschleunigen oder Verlangsamen erneut startet, und die Wechselrichtervorrichtung die Wechselspannung für den Elektromotor allmählich erhöht, und zwar im synchronen Steuermodus.

5. Schienenfahrzeug, umfassend: die Wechselrichtervorrichtung gemäß einem der Ansprüche 1 bis 4; einen Glättungskondensator, um der Wechselrichtervorrichtung eine Gleichspannung zuzuführen; und einen Wechselstrom-Elektromotor, der durch eine von der Wechselrichtervorrichtung ausgegebene Drei-Phasen-Wechselstromleistung angetrieben wird,
wobei das Schienenfahrzeug durch Antreiben eines Rades mit dem Wechselstrom-Elektromotor fährt.

6. Wechselrichtersteuervorrichtung, die eine Wechselrichtervorrichtung steuert, die Schalt-Schaltkreise für drei Phasen und das Umwandeln einer Gleich (DC)-Spannung in eine Drei-Phasen-Wechsel (AC) -Spannung umfasst, wobei jeder der Schalt-Schaltkreise zwei Schaltelemente aufweist, die in Serie geschaltet sind und einen Verbindungspunkt als einen Wechselstromausgang aufweisen,
wobei die Wechselrichtersteuervorrichtung einen synchronen Steuermodus zum Ausgeben eines Gate-Treiberbefehls aufweist, um eine EIN-AUS -Steuerung der Schaltelemente für jede Phase als Antwort auf einen Amplitudenbefehl der Wechselspannung auszuführen, wobei jede Phase eine Wechselspannungsgrundwelle mit einer Phasenperiode von 360 Grad aufweist, in der eine vorbestimmte Phasenregion von 60 Grad bis 120 Grad einen lokalen Maximalwert der Wechselspannungsgrundschwingung enthält, und eine weitere vorbestimmte Phasenregion von 240 Grad bis 300 Grad einen lokalen Minimalwert der Wechselspannungsgrundschwingung enthält,
**dadurch gekennzeichnet,**
**dass** die Schaltelemente auf Basis einer Impulsbreitenmodulation in den vorbestimmten Phasenregionen EIN-AUS -gesteuert sind, wobei die Schaltelemente in den Phasenregionen von 0 Grad bis 60 Grad und von 120 Grad bis 180 Grad in einem EIN-Zustand gehalten werden, und die Schaltelemente in den Phasenregionen von 180 Grad bis 240 Grad und von 300 Grad bis 360 Grad in einem AUS-Zustand gehalten werden, und
**dass** zu jedem beliebigen Zeitpunkt die Schaltelemente für zwei der Phasen im EIN- oder im AUS-Zustand gehalten werden, und die dritte Phase sich in einer von ihren vorbestimmten Phasenregionen befindet.

7. Wechselrichtersteuervorrichtung gemäß Anspruch 6,
die im synchronen Steuermodus die Wechselspannung von Null bis zu einer Maximalspannung regeln kann, und zwar durch Regeln eines Intervalls zwischen einem EIN-Zustand und einem AUS-Zustand in den vorbestimmten Phasenregionen, in denen die EIN-AUS-Steuerung der Schaltelemente für jede Phase ausgeführt wird.

8. Wechselrichtersteuervorrichtung gemäß Anspruch 6 oder 7,

die eine Steuerung in einem asynchronen Modus ausführt, um eine Träger- und eine Modulations-Welle asynchron in einer Region zu erzeugen, in der eine Ausgangsspannungsgrundwelle eine niedrige Frequenz aufweist,
die eine Steuerung in einem Ein-Impuls-Modus ausführt, um einen Impuls in einer Periode der Ausgangsspannungsgrundwelle in einer Region auszugeben, in der die Ausgangsspannungsgrundwelle eine hohe Frequenz aufweist, und
die eine Steuerung im synchronen Steuermodus in einer Region ausführt, in der die Ausgangsspannungsgrundwelle eine Frequenz zwischen dem asynchronen Modus und dem Ein-Impuls-Modus aufweist.

9.  Wechselrichtersteuervorrichtung gemäß Anspruch 6,
wobei die Drei-Phasen-Wechselspannung der Wechselrichtervorrichtung einem Elektromotor zugeführt wird, der ein Fahrzeug antreibt, und
wobei in einem Fall, nachdem das Fahrzeug ein Umschalten der Wechselrichtervorrichtung während des Fahrbetriebs anhält und danach im Leerlauf fährt, das Fahrzeug die Wechselrichtervorrichtung für ein Beschleunigen oder Verlangsamen erneut startet, und die Wechselrichtersteuervorrichtung die Wechselspannung für den Elektromotor allmählich erhöht, und zwar im synchronen Steuermodus.

**Revendications**

1.  Dispositif onduleur comprenant des circuits de commutation pour trois phases et convertissant une tension en courant continu (DC) en une tension en courant alternatif (AC) triphasée, chacun des circuits de commutation ayant deux éléments de commutation connectés en série et ayant un point de connexion en tant que sortie AC,
dans lequel le dispositif onduleur a un mode de commande synchrone pour effectuer une commande marche-arrêt (ON-OFF) des éléments de commutation pour chaque phase en réponse à une instruction d'amplitude de la tension AC, chaque phase ayant une onde fondamentale de tension AC avec une période de phase de 360 degrés, une région de phase prédéterminée de 60 degrés à 120 degrés contenant une valeur maximale locale de l'onde fondamentale de tension AC et une autre région de phase prédéterminée de 240 degrés à 300 degrés contenant une valeur minimale locale de l'onde fondamentale de tension AC,
**caractérisé en ce que** :

les éléments de commutation sont commandés ON-OFF sur la base d'une modulation de largeur d'impulsion dans lesdites régions de phase prédéterminées, les éléments de commutation étant maintenus dans un état ON dans les régions de phase comprises entre 0 degré et 60 degrés et entre 120 degré et 180 degrés, et les éléments de commutation étant maintenus dans un état OFF dans les régions de phase comprises entre 180 degrés et 240 degrés et entre 300 degrés et 360 degrés, et
à tout moment, les éléments de commutation pour deux des phases sont maintenus dans l'état ON ou OFF et la troisième phase se trouve dans l'une de ses régions de phase prédéterminées.

2.  Dispositif onduleur selon la revendication 1,
dans lequel, dans le mode de commande synchrone, le dispositif onduleur peut réguler la tension AC de zéro à une tension maximale, en régulant un intervalle entre un état ON et un état OFF dans les régions de phase prédéterminées dans lesquelles la commande ON-OFF des éléments de commutation pour chaque phase est réalisée.

3.  Dispositif onduleur selon la revendication 1 ou 2, qui :

effectue une commande dans un mode asynchrone pour générer une porteuse et une onde de modulation de manière asynchrone, dans une région dans laquelle une onde fondamentale de tension de sortie a une basse fréquence,
effectue une commande dans un mode à une impulsion pour émettre une impulsion dans une période de l'onde fondamentale de tension de sortie, dans une région dans laquelle l'onde fondamentale de tension de sortie a une haute fréquence, et
effectue une commande dans le mode de commande synchrone, dans une région dans laquelle l'onde fondamentale de tension de sortie a une fréquence comprise entre le mode asynchrone et le mode à une impulsion.

4.  Dispositif onduleur selon la revendication 1,
dans lequel la tension AC triphasée du dispositif onduleur est fournie à un moteur électrique qui entraîne un véhicule, et
dans le cas où, après que le véhicule ait arrêté de commuter le dispositif onduleur tout en se déplaçant puis se déplace en roue libre, le véhicule redémarre le dispositif onduleur pour accélérer ou décélérer, et le dispositif onduleur augmente progressivement la tension AC du moteur électrique, dans le mode de commande synchrone.

5. Véhicule ferroviaire comprenant : le dispositif onduleur selon l'une quelconque des revendications 1 à 4 ; un condensateur de lissage pour alimenter une tension DC au dispositif onduleur ; et un moteur électrique AC devant être entraîné par une puissance AC triphasée que le dispositif onduleur délivre en sortie, dans lequel le véhicule ferroviaire se déplace en entraînant une roue à l'aide du moteur électrique AC.

6. Dispositif de commande d'onduleur qui commande un dispositif d'onduleur comprenant des circuits de commutation pour trois phases et convertissant une tension en courant continu (DC) en une tension en courant alternatif (AC) triphasée, chacun des circuits de commutation ayant deux éléments de commutation connectés en série et ayant un point de connexion en tant que sortie AC, dans lequel le dispositif de commande d'onduleur a un mode de commande synchrone pour délivrer en sortie une instruction d'entraînement de grille afin d'effectuer une commande marche-arrêt (ON-OFF) des éléments de commutation pour chaque phase en réponse à une instruction d'amplitude de la tension AC, chaque phase ayant une onde fondamentale de tension AC avec une période de phase de 360 degrés, une région de phase prédéterminée de 60 degrés à 120 degrés contenant une valeur maximale locale de l'onde fondamentale de tension AC et une autre région de phase prédéterminée de 240 degrés à 300 degrés contenant une valeur minimale locale de l'onde fondamentale de tension AC,
**caractérisé en ce que** :

les éléments de commutation sont commandés ON-OFF sur la base d'une modulation de largeur d'impulsion dans lesdites régions de phase prédéterminées, les éléments de commutation étant maintenus dans un état ON dans les régions de phase comprises entre 0 degré et 60 degrés et entre 120 degrés et 180 degrés, et les éléments de commutation étant maintenus dans un état OFF dans les régions de phase comprises entre 180 degrés et 240 degrés et entre 300 degrés et 360 degrés, et
à tout moment, les éléments de commutation pour deux des phases sont maintenus dans l'état ON ou OFF et la troisième phase se trouve dans l'une de ses régions de phase prédéterminées.

7. Dispositif de commande d'onduleur selon la revendication 6, qui, dans le mode de commande synchrone, peut réguler la tension AC de zéro à une tension maximale, en régulant un intervalle entre un état ON et un état OFF dans les régions de phase prédéterminées dans lesquelles la commande ON-OFF des éléments de commutation pour chaque la phase est effectuée.

8. Dispositif de commande d'onduleur selon la revendication 6 ou 7, qui :

effectue une commande dans un mode asynchrone pour générer une porteuse et une onde de modulation de manière asynchrone, dans une région dans laquelle une onde fondamentale de tension de sortie a une basse fréquence,
effectue une commande dans un mode à une impulsion pour délivrer en sortie une impulsion dans une période de l'onde fondamentale de tension de sortie, dans une région dans laquelle l'onde fondamentale de tension de sortie a une haute fréquence, et
effectue une commande dans le mode de commande synchrone, dans une région dans laquelle l'onde fondamentale de tension de sortie a une fréquence comprise entre le mode asynchrone et le mode à une impulsion.

9. Dispositif de commande d'onduleur selon la revendication 6, dans lequel la tension AC triphasée du dispositif onduleur est fournie à un moteur électrique qui entraîne un véhicule, et
dans le cas où, après que le véhicule ait arrêté de commuter le dispositif onduleur tout en se déplaçant puis se déplace en roue libre, le véhicule redémarre le dispositif onduleur pour accélérer ou décélérer, et le dispositif onduleur augmente progressivement la tension AC du moteur électrique, dans le mode de commande synchrone.

# FIG. 1

EP 2 787 629 B1

# FIG. 2

# FIG. 3

# FIG. 4

## FIG. 5

EP 2 787 629 B1

# FIG. 6

EP 2 787 629 B1

# FIG. 7

# FIG. 8

# FIG. 9

EP 2 787 629 B1

# FIG. 10

U-PHASE
ALTERNATING-
CURRENT VOLTAGE
FUNDAMENTAL
WAVE

| ON FIX-ING | ON-OFF CON-TROL | ON FIX-ING | OFF FIX-ING | ON-OFF CON-TROL | OFF FIX-ING |

ON COMMAND

U-PHASE
PWM PULSE

OFF COMMAND

V-PHASE
ALTERNATING-
CURRENT VOLTAGE
FUNDAMENTAL
WAVE

| ON-OFF CON-TROL | OFF FIX-ING | ON FIX-ING | ON-OFF CON-TROL | ON FIX-ING | OFF FIX-ING |

ON COMMAND

V-PHASE
PWM PULSE

OFF COMMAND

W-PHASE
ALTERNATING-
CURRENT VOLTAGE
FUNDAMENTAL
WAVE

| ON FIX-ING | OFF FIX-ING | ON-OFF CON-TROL | OFF FIX-ING | ON FIX-ING | ON-OFF CON-TROL |

ON COMMAND

W-PHASE
PWM PULSE

OFF COMMAND

PHASE (deg)

0    60    120    180    240    300    360

23

# FIG. 11

EP 2 787 629 B1

# FIG. 12

# FIG. 13

FIG. 14

FIG. 15

# FIG. 16

# FIG. 17

EP 2 787 629 B1

# FIG. 18

MODULATION WAVE

CARRIER

U-PHASE
MODULATION
WAVE
CARRIER

1

-1

ON COMMAND

U-PHASE
PWM PULSE

OFF COMMAND

PWM
PULSE

PHASE
(deg)

0      60      120      180      240      300      360

# FIG. 19

# FIG. 20

# FIG. 21

|  | CONVENTIONAL ART | PRESENT INVENTION |
|---|---|---|
| SYNCHRONOUS NINE-PULSE MODE (MODULATION RATIO 60%) | 3 3 % | 2 5 % |
| SYNCHRONOUS SEVEN-PULSE MODE (MODULATION RATIO 85%) | 3 3 % | 2 7 % |
| SYNCHRONOUS THREE-PULSE MODE (MODULATION RATIO 95%) | 3 2 % | 2 6 % |

# FIG. 22

# FIG. 23

EP 2 787 629 B1

# FIG. 24

37

## FIG. 25

## FIG. 26

**EP 2 787 629 B1**

**Patent documents cited in the description**

- JP H09247953 A
- US 2002008489 A
- US 2008112695 A